# NEUE EUROPÄISCHE PATENTSCHRIFT

(11) **EP 1 884 542 B2**
(45) Veröffentlichungstag und Bekanntmachung des Hinweises auf die Entscheidung über den Einspruch: **20.12.2017**
(45) Hinweis auf die Patenterteilung: 18.03.2009
(21) Anmeldenummer: 07113472.0
(22) Anmeldetag: 31.07.2007
(51) Int. Cl.: C08L 83/04, C08K 5/57, C08K 5/5465, C08G 77/18

(54) **Vernetzbare Massen auf der Basis von Organosiliciumverbindungen**
Crosslinkable compoitions based on organosilicon compounds
Compositions reticulables a base d'organosilicium

(30) Priorität: 04.08.2006 DE 102006036556
(43) Veröffentlichungstag der Anmeldung: 06.02.2008
(73) Patentinhaber: Wacker Chemie AG, 81737 München (DE)
(72) Erfinder: Prasse, Marko, 01612, Glaubitz (DE)
(74) Vertreter: Budczinski, Angelika

(56) Entgegenhaltungen:
- EP-A- 1 614 723
- EP-A1- 0 897 666
- EP-A1- 0 931 811
- EP-A1- 0 954 965
- EP-A1- 0 954 966
- EP-A2- 0 234 822
- EP-A2- 0 922 386
- WO-A1-95/32240
- WO-A1-95/32245
- WO-A1-2004/000953
- WO-A1-2009/128883
- DE-A1- 3 447 636
- DE-A1- 19 644 224
- US-A- 5 534 563
- US-A1- 2004 234 603
- US-A1- 2006 063 001
- US-B1- 6 291 549
- US-B1- 6 365 066
- US-B2- 7 033 673
- "One Part Silicone Sealants", Gelest, Inc., Dale Flackett, FlackTec Inc., nicht datiert
- KathonTM 287 PXE Microbiocide for Silicone Sealants, November 2005
- DE BUYL F.: 'Silicone sealants and structural adhesives' INTERNATIONAL JOURNAL OF ADHESION & ADHESIVES Bd. 21, 2001, Seiten 411 - 422
- WOLF A.T.: 'Durability of Building and Construction Sealants and Adhesives', 2004, ASTM Seiten 228 - 251
- KIRK-OTHMER: 'Encyclopedia of Chemical Technology', Bd. 22, teil 4TH ED 1997, JOHN WILEY & SONS, NEW YORK Seiten 119 - 120
- GHOSH T. ET AL: 'Controlling the release of isothiazolone biocides' PROCEED. INTL. SYMP. CONTROL REL. BIOACT. MATER Bd. 25, 1998, Seiten 324 - 325
- WILFRED PAULUS: 'Microbiocides for the Protection of Materials, A Handbook', Bd. 1ST ED., 1993, CHAPMAN & HALL, LONDON Seiten 300,301 - 324-331
- GÄCHTER / MÜLLER: 'Plastics Additives', Bd. 4TH. ED., 1993, HANSER/GARDNER VERLAG Seite 792
- IVD Merkblatt Nr. 1 4, Ausgabe Januar 2011, Dichtstoffe und Schimmelpilzbefall, Ursachen-Vorbeugen-Sanierung
- beispielhafte Testmethoden zur Beurteilung des Aushärtverhaltens (Test 1), der Gelbfärbung (Test 2) und der fungiziden Wirkung (Test 3) betitelt mit "WA 10632".
- 'Reaktionsverhalten und Syntheseprinzipien, Lehrbuch', 1973, VEB DEUTSCHER VERLAG FÜR GRUNDSTOFFINDUSTRIE, LEIPZIG Seiten 211 - 213
- Norm DIN EN 13716:2001 "Bestimmung des Gehalts an Gesamt-Basenstickstoff"
- DEAL V.Z. ET AL: 'Determination of basic nitrogen in oils' ANALYTICAL CHEMISTRY Bd. 25, Nr. 3, 1953, Seiten 426 - 432

## Beschreibung

Die Erfindung betrifft vernetzbare Massen auf der Basis von Organosiliciumverbindungen, die verkapselte Biozide enthalten, Verfahren zu deren Herstellung sowie deren Verwendung.

Unter Ausschluss von Wasser lagerfähige, bei Zutritt von Wasser bei Raumtemperatur zu Elastomeren vulkanisierende Einkomponenten-Dichtmassen sind bekannt. Diese Produkte werden in großen Mengen zum Beispiel in der Bauindustrie eingesetzt. Insbesondere in Umgebungen mit hoher Luftfeuchtigkeit, wie zum Beispiel in Bädern, Küchen, aber beispielsweise auch tropischen Regionen, bildet sich auf der Oberfläche der Dichtmassen leicht ein Bewuchs mit Organismen wie Pilzen oder auch Algen. Um dies zu verhindern, werden den Dichtmassen Fungizide zugesetzt, die den Bewuchs verhindern.

Andererseits ist der Einsatz vieler Biozide in reiner Form problematisch, da es zu Wechselwirkungen mit anderen Inhaltsstoffen, wie z.B. aminischen Haftvermittlern, kommen kann, was zu Verfärbungen, Vulkanisationsstörungen und verminderter z.B. fungizider Wirksamkeit führen kann.

Die eingesetzten Biozide müssen an die Oberfläche diffundieren können, um in der Umgebung wirken zu können. Damit verbunden ist ein recht schnelles Auswaschen des Wirkstoffes und damit ein recht schneller Verlust der bioziden Wirksamkeit. Versucht man dem durch eine hohe Konzentration des freien Wirkstoffes entgegenzuwirken, führt dies im Allgemeinen zu ökologischen Problemen sowie zu einer Verteuerung der Produkte.

Des Weiteren sind bestimmte Biozide nur mit UV-Stabilisatoren einsetzbar. Eine Mischung von freiem Wirkstoff und UV-Stabilisator in der Zubereitung verhindert jedoch nicht effektiv die Zersetzung des Wirkstoffes durch UV-Licht während der Lagerung.

Zur Lösung der o.g. Probleme wird vorgeschlagen, dass verkapselte Biozide in Dichtstoffformulierungen eingesetzt werden können, so dass keine Verfärbungen auftreten und eine außergewöhnlich lange biozide Wirkung erzielt werden kann.

Gegenstand der Erfindung sind daher vernetzbare Massen auf der Basis von Organosiliciumverbindungen, dadurch gekennzeichnet, dass sie verkapselte Biozide enthalten.

Bei den vernetzbaren Massen handelt es sich bevorzugt um durch Kondensationsreaktion vernetzbare Massen.

Im Rahmen der vorliegenden Erfindung soll die Bezeichnung "Kondensationsreaktion" auch einen gegebenenfalls vorangehenden Hydrolyseschritt mitumfassen.

Im Rahmen der vorliegenden Erfindung sollen unter der Bezeichnung "kondensationsfähige Reste" auch solche Reste verstanden werden, die einen gegebenenfalls vorangehenden Hydrolyseschritt miteinschließen.

Bei den erfindungsgemäßen Massen handelt es sich um vernetzbare Massen auf der Basis von Organosiliciumverbindungen, dadurch gekennzeichnet, dass sie verkapselte Biozide enthalten, wobei es sich um solche vernetzbare Massen handelt herstellbar unter Verwendung von
(A) Organosiliciumverbindung mit mindestens zwei kondensationsfähigen Gruppen,
(B) verkapselten Bioziden, wobei es sich bei dem Biozid um 2-n-Octyl-4-isothiazolin-3-on (OIT) und 4,5-Dichloro-2-n-octyl-4-isothiazolin-3-on (DCOIT) handelt,
(D) basischen Stickstoff aufweisenden Verbindungen, wobei Komponente in der in Anspruch 1 offenbarten Menge eingesetzt wird, und
   gegebenenfalls
(C) Vernetzer.

Bei den kondensationsfähigen Gruppen, welche die eingesetzten, an der Vernetzungsreaktion beteiligten Organosiliciumverbindungen aufweisen, kann es sich um beliebige Gruppen handeln, wie Hydroxy-, Oximato-, Acetoxy- und Organyloxygruppen, insbesondere Alkoxyreste, wie Ethoxyreste, Alkoxyethoxyreste und Methoxyreste.

Bei den erfindungsgemäß eingesetzten Organosiliciumverbindungen (A) kann es sich um alle Organosiliciumverbindungen mit mindestens zwei kondensationsfähigen Gruppen handeln, die auch bisher in durch Kondensationsreaktion vernetzbaren Massen eingesetzt worden sind. Es kann sich dabei sowohl um reine Siloxane, also=Si-0-Si= -Strukturen, als auch um Silcarbane, also =Si-R"-Si= -Strukturen mit R" gleich einem zweiwertigen, gegebenenfalls substituierten oder mit Heteroatomen unterbrochenen Kohlenwasserstoffrest oder beliebigen Organosiliciumgruppen aufweisende Copolymere handeln.

Bevorzugt handelt es sich bei den erfindungsgemäß eingesetzten Organosiliciumverbindungen (A) um solche enthaltend Einheiten der Formel

Rₐ(OR¹)_{b}Y_{c}SiO_{(4-a-b-c)/2} (I),

wobei
R gleich oder verschieden sein kann und gegebenenfalls substituierte Kohlenwasserstoffreste, die durch Sauerstoffatome unterbrochen sein können, bedeutet,
R1 gleich oder verschieden sein kann und Wasserstoffatom oder einwertige, gegebenenfalls substituierte Kohlenwasserstoffreste, die durch Sauerstoffatome unterbrochen sein können, bedeutet,
Y gleich oder verschieden sein kann und Halogenatom, Pseudohalogenrest, Si-N-gebundene Aminreste, Amidreste, Oximreste und Aminoxyreste bedeutet,
a 0, 1, 2 oder 3, bevorzugt 1 oder 2, ist,
b 0, 1, 2 oder 3, bevorzugt 0, 1 oder 2, besonders bevorzugt 0, ist und
c 0, 1, 2 oder 3, bevorzugt 0 oder 1, besonders bevorzugt 0, ist,
mit der Maßgabe, dass die Summe aus a+b+c kleiner oder gleich 4 ist und pro Molekül mindestens zwei kondensationsfähige Reste (OR¹) anwesend sind.

Bevorzugt ist die Summe a+b+c kleiner oder gleich 3.

Bevorzugt handelt es sich bei Rest R um einwertige Kohlenwasserstoffreste mit 1 bis 18 Kohlenstoffatomen, die gegebenenfalls mit Halogenatomen, Aminogruppen, Ethergruppen, Estergruppen, Epoxygruppen, Mercaptogruppen, Cyanogruppen oder (Poly)-glykolresten substituiert sind, wobei letztere aus Oxyethylen- und/oder Oxypropyleneinheiten aufgebaut sind, besonders bevorzugt um Alkylreste mit 1 bis 12 Kohlenstoffatomen, insbesondere um den Methylrest. Es kann sich bei Rest R aber auch um zweiwertige Reste handeln, die z.B. zwei Silylgruppen miteinander verbinden.

Beispiele für Reste R sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pen-tylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest; Dodecylreste, wie der n-Dodecylrest; Octadecylreste, wie der n-Octadecylrest; Cycloalkylreste, wie der Cyclopentyl-, Cyclohexyl-, Cycloheptylrest und Methylcyclohexylreste; Alkenylreste, wie der Vinyl-, 1-Propenyl- und der 2-Propenylrest; Arylreste, wie der Phenyl-, Naphthyl-, Anthryl- und Phenanthrylrest; Alkarylreste, wie o-, m-, p-Tolylreste; Xylylreste und Ethylphenylreste; und Aralkylreste, wie der Benzylrest, der der α- und der β-Phenylethylrest.

Beispiele für substituierte Reste R sind Methoxyethyl-, Ethoxyethyl- und der Ethoxyethoxyethylrest.

Beispiele für zweiwertige Reste R sind Polyisobutylendiylreste und propandiylterminierte Polypropylenglykolreste.

Beispiele für Reste R¹ sind die für R angegebenen einwertigen Reste.

Bevorzugt handelt es sich bei Rest R¹ um Wasserstoffatom oder Alkylreste mit 1 bis 12 Kohlenstoffatomen, besonders bevorzugt um Wasserstoffatom, Methyl- oder Ethylrest, insbesondere um Wasserstoffatom.

Beispiele für Rest Y sind Dimethylamino-, Cyclohexylamino- und Methylethylketoximorest.

Besonders bevorzugt handelt es sich bei erfindungsgemäß eingesetzten Organosiliciumverbindungen (A) um solche der Formel

(OR¹)₃-_{f}R_{f}Si-(SiR₂-O)ₑ-SiR_{f}(OR¹)_{3-f} (II),

wobei
R und R¹ eine der oben angegebenen Bedeutungen haben,
e gleich 30 bis 3000 ist und
f gleich 1 oder 2 ist.

Vorzugsweise ist f gleich 2, wenn R¹ die Bedeutung von Wasserstoffatom hat, und f gleich 1, wenn R¹ eine Bedeutung verschieden Wasserstoffatom hat.

Beispiele für Organosiliciumverbindungen (A) sind

(MeO)₂MeSiO[SiMe₂O]₂₀₀₋₂₀₀₀SiMe(OMe)₂,

(HO)Me₂SiO[SiMe₂O]₂₀₀₋₂₀₀₀SiMe₂(OH),

(EtO)₂MeSiO[SiMe₂O]₂₀₀₋₂₀₀₀SiMe(OEt)₂,

(HO)MeViSiO[SiMe₂O]₂₀₀₋₂₀₀₀SiMeVi(OH),

(MeO)₂ViSiO[SiMe₂O]₂₀₀₋₂₀₀₀SiVi(OMe)₂

und

(EtO)₂ViSiO[SiMe₂O]₂₀₀₋₂₀₀₀SiVi(OEt)₂,

wobei Me Methylrest, Et Ethylrest und Vi Vinylrest bedeutet.

Die erfindungsgemäß eingesetzten Organosiliciumverbindungen (A) haben eine Viskosität von bevorzugt 100 bis 106 mPas, besonders bevorzugt von 103 bis 350 000 mPas, jeweils bei 25°C.

Bei den Organosiliciumverbindungen (A) handelt es sich um handelsübliche Produkte bzw. können nach in der Siliciumchemie gängigen Methoden hergestellt werden.

Bei den Bioziden der erfindungsgemäß eingesetzten Komponente (B) handelt es sich um 2-n-Octyl-4-isothiazolin-3-on (OIT) und 4,5-Dichloro-2-n-octyl-4-isothiazolin-3-on (DCOIT).

Die bioziden Wirkstoffe, die Komponente (B) enthält, sind handelsübliche Produkte bzw. können nach in der Organischen Chemie gängigen Methoden hergestellt werden.

Bei der erfindungsgemäß eingesetzten Komponente (B) handelt es sich bevorzugt um bei Raumtemperatur und dem Druck der umgebenden Atmosphäre feste und feinteilige Stoffe, die einen mittleren Teilchendurchmesser von bevorzugt kleiner 20 µm, besonders bevorzugt von 0,1 bis 20 µm, insbesondere von 0,2 bis 10 µm, haben. Die Biozide können mit dem Trägermaterial polare Wechselwirkung haben, wobei eine Diffusion aus dem Trägermaterial möglich sein muss. Die Struktur des Biozides ist nach dem Verlassen des Trägermaterials bevorzugt unverändert.

Die erfindungsgemäß eingesetzte Komponente (B) kann nun nach beliebigen und bisher bekannten Verfahren hergestellt werden. Als Verkapselungsmaterial können die üblichen, dem Stand der Technik entsprechenden Polymere und porösen Materialien, eingesetzt werden. Beispiele für Verkapselungsmaterialien und -techniken finden sich beispielsweise in WO 2004/000953 A1 und in DE-A 10359703, die zum Offenbarungsgehalt der vorliegenden Erfindung zu zählen sind. Es können als Verkapselungsmaterial auch cyclische Verbindungen eingesetzt werden, wie z.B. Makrocyclen aus Polyethylenglykol (Kronenether) oder Polypropylenglykol, die gegebenenfalls modifiziert sein können, oder Cyclodextrine, wie z.B. solche, die käuflich erhältlich sind unter der Marke CAVAMAX® oder CAVASOL® bei der Wacker Chemie AG. Beispiele hierzu finden sich in EP-A 1273638, die zum Offenbarungsgehalt der vorliegenden Erfindung zu zählen ist. Das Verkapselungsmaterial muss ausreichend scherstabil und UVstabil sein.

Komponente (B) enthält vorzugsweise kein Wasser. Falls die verkapselten Wirkstoffe (B) nach ihrer Herstellung Wasser enthalten, werden sie vor dem erfindungsgemäßen Einsatz vorzugsweise weitestgehend getrocknet. Dies kann nach bekannten Verfahren, wie beispielsweise mittels Wirbelschichttrocknung, Gefriertrocknung oder Sprühtrocknung, gegebenenfalls nach Zusatz von Schutzkolloiden als Verdüsungshilfe, erfolgen. Falls es sich bei Komponente (B) nach ihrer Herstellung um wässrige Dispersionen handelt, werden diese vorzugsweise sprühgetrocknet. Die Sprühtrocknung erfolgt dabei in üblichen Sprühtrocknungsanlagen, wobei die Zerstäubung mittels Ein-, Zwei- oder Mehrstoffdüsen oder mit einer rotierenden Scheibe erfolgen kann. Die Austrittstemperatur wird im allgemeinen im Bereich von 45°C bis 120°C, bevorzugt 60°C bis 90°C, je nach Anlage, Tg des Harzes und gewünschtem Trocknungsgrad, gewählt.

Falls es sich bei dem Trägermaterial um Polymere handelt, wird in der Regel die Verdüsungshilfe in einer Gesamtmenge von 3 bis 30 Gew.-%, bezogen auf die polymeren Bestandteile der Dispersion, eingesetzt. Das heißt, die Gesamtmenge an Schutzkolloid vor dem Trocknungsvorgang soll mindestens 3 bis 30 Gew.-%, bezogen auf den Polymeranteil betragen; bevorzugt werden 5 bis 20 Gew.-% bezogen auf den Polymeranteil eingesetzt.

Geeignete Verdüsungshilfe sind Schutzkolloide, wie z.B. teilverseifte oder vollverseifte Polyvinylalkohole; Polyvinylpyrrolidone; Polyvinylacetale; Polysaccharide in wasserlöslicher Form, wie Stärken (Amylose und Amylopectin), Cellulosen und deren Carboxymethyl-, Methyl-, Hydroxyethyl-, Hydroxypropyl-Derivate; Proteine wie Casein oder Caseinat, Sojaprotein, Gelatine; Ligninsulfonate; synthetische Polymere wie Poly(meth)-acrylsäure, Copolymerisate von (Meth)acrylaten mit carboxylfunktionellen Comonomereinheiten, Poly(meth)acrylamid, Polyvinylsulfonsäuren und deren wasserlöslichen Copolymere; Melaminformaldehydsulfonate, Naphthalinformaldehydsulfonate, Styrolmaleinsäure- und Vinylethermaleinsäure-Copolymere.

Bei der Verdüsung hat sich vielfach ein Gehalt von bis zu 1,5 Gew.-% Antischaummittel, bezogen auf das Basispolymerisat, als günstig erwiesen. Zur Erhöhung der Lagerfähigkeit durch Verbesserung der Verblockungsstabilität, insbesondere bei Pulvern mit niedriger Glasübergangstemperatur, kann das erhaltene Pulver mit einem Antiblockmittel (Antibackmittel), vorzugsweise bis 30 Gew.-%, bezogen auf das Gesamtgewicht polymerer Bestandteile, ausgerüstet werden. Beispiele für Antiblockmittel sind Ca- bzw.

Mg-Carbonat, Talk, Gips, Kieselsäure, Kaoline, Silicate mit Teilchengrößen vorzugsweise im Bereich von 10 nm bis 10 µm.

Zur hydrophoben Ausrüstung können vor der Trocknung der Dispersionen diesen noch ein oder mehrere Hydrophobierungsmittel aus der Gruppe umfassend Fettsäuren und Fettsäurederivate sowie Organosiliciumverbindungen zugegeben werden. Dazu geeignete Verbindungen sind beispielsweise in der DE-A 10323205 aufgezählt.

Die Viskosität der zu verdüsenden Speise wird über den Feststoffgehalt so eingestellt, dass ein Wert von < 500 mPas (Brookfield-Viskosität bei 20 Umdrehungen und 23°C), bevorzugt < 250 mPas, erhalten wird. Der Feststoffgehalt der zu verdüsenden Dispersion beträgt > 35 Gew.-%, bevorzugt > 40 Gew.-%.

Der Wirksoffgehalt der getrockneten Komponente B beträgt 40 bis 80 Gew.-%, bevorzugt 50 bis 75 Gew.-%, und hängt von der gewählten Verkapselungsmittel und den Hilfsstoffen ab.

Bevorzugt handelt es sich bei der erfindungsgemäßen Komponente (B) um trockene Pulver, die in dieser Form oder - falls erwünscht - mit inerten Ölen, wie z.B. Siliconölen, Polyether oder höhersiedenden Kohlenwasserstoffen, angepastet und/oder mit Verdickungsmitteln, wie verstärkenden Füllstoffen oder pyrogenen Kieselsäuren, und gegebenenfalls mit weiteren Füllstoffen, wie z.B. Calciumcarbonat oder Bariumsulfat mit Teilchengrößen vorzugsweise im Bereich von 10 nm bis 10 µm, rheologisch angepasst werden. Die erfindungsgemäß eingesetzten Zubereitungen (B) können eine pastös und standfest bis flüssig und pumpbare Konsistenz haben.

Der Wirkstoffgehalt (Gehalt an reinem Biozid) in den erfindungsgemäß eingesetzten Zubereitungen beträgt bevorzugt 2 bis 50 Gew.-%, besonders bevorzugt 3 bis 40 Gew.-%.

Die erfindungsgemäßen Massen enthalten Komponente (B) in Mengen von vorzugsweise 0,01 bis 3 Gewichtsteilen, besonders bevorzugt von 0,1 bis 1 Gewichtsteilen, insbesondere von 0,2 bis 0,4 Gewichtsteilen, jeweils bezogen auf 100 Gewichtsteile Organosiliciumverbindung (A).

Bei den in den erfindungsgemäßen Massen gegebenenfalls eingesetzten Vernetzern (C) kann es sich um beliebige, bisher bekannte Vernetzer mit mindestens drei kondensationsfähigen Resten handeln, wie beispielsweise Silane oder Siloxane mit mindestens drei Organyloxygruppen.

Bei den in den erfindungsgemäßen Massen gegebenenfalls eingesetzten Vernetzern (C) handelt es sich vorzugsweise um Organosiliciumverbindungen der Formel

(R⁵O)_{d}Z_{g}SiR⁴_{(4-d-g)} (III),

wobei
R⁴ gleich oder verschieden sein kann und einwertige, gegebenenfalls substituierte Kohlenwasserstoffreste, die durch Sauerstoffatome unterbrochen sein können, bedeutet,
R⁵ gleich oder verschieden sein kann und eine oben für R¹ genannte Bedeutung besitzt,
Z gleich oder verschieden sein kann und eine für Y angegebene Bedeutung hat,
d 0, 1, 2, 3 oder 4, bevorzugt 2 oder 3, besonders bevorzugt 3, ist und
g 0, 1, 2, 3 oder 4, bevorzugt 0 oder 3, besonders bevorzugt 0, ist,
mit der Maßgabe, dass die Summe d+g gleich 3 oder 4 ist,
sowie deren Teilhydrolysate.

Bei den Teilhydrolysaten kann es sich dabei um Teilhomohydrolysate handeln, d.h. Teilhydrolysate von einer Art von Organosiliciumverbindung der Formel (III), wie auch um Teilcohydrolysate, d.h. Teilhydrolysate von mindestens zwei verschiedenen Arten von Organosiliciumverbindungen der Formel (III).

Handelt es sich bei den in den erfindungsgemäßen Massen gegebenenfalls eingesetzten Vernetzern (C) um Teilhydrolysate von Organosiliciumverbindungen der Formel (III), so sind solche mit bis zu 6 Siliciumatomen bevorzugt.

Beispiele für Rest R⁵ sind die oben für Rest R¹ genannten Beispiele. Bevorzugt handelt es sich bei Rest R⁶ um Wasserstoffatom und Alkylreste, besonders bevorzugt um Wasserstoffatom und Alkylreste mit 1 bis 4 Kohlenstoffatomen, insbesondere um Wasserstoffatom, den Methyl- und den Ethylrest.

Beispiele für Rest R⁴ sind die oben für Rest R genannten einwertigen Beispiele, wobei Kohlenwasserstoffreste mit 1 bis 12 Kohlenstoffatomen bevorzugt und der Methyl- und der Vinylrest besonders bevorzugt sind.

Beispiele für Z sind die für Y angegebenen Beispiele, wobei Methylethylketoximoreste bevorzugt sind.

Besonders bevorzugt handelt es sich bei den in den erfindungsgemäßen Massen gegebenenfalls eingesetzten Vernetzern (C) um Tetramethoxysilan, Tetraethoxysilan, Tetrapropoxysilan, Tetrabutoxysilan, Methyltrimethoxysilan, Methyltriethoxysilan, Vinyltrimethoxysilan, Vinyltriethoxysilan, Phenyltrimethoxysilan, Phenyltriethoxysilan, 3-Cyanopropyltrimethoxysilan, 3-Cyanopropyltriethoxysilan, 3-(Glycidoxy)propyltriethoxysilan, 1,2-Bis-(trimethoxysilyl)ethan, 1,2-Bis(triethoxysilyl)ethan, Methyltris(methylethylketoximo)silan, Vinyltris(methylethylketoximo)-silan, Tetrakis-(methylethylketoximo)silan sowie Teilhydrolysate der genannten Organosiliciumverbindungen, wie z.B. Hexaethoxydisiloxan.

Die in den erfindungsgemäßen Massen gegebenenfalls eingesetzten Vernetzer (C) sind handelsübliche Produkte bzw. können nach in der Siliciumchemie bekannten Verfahren hergestellt werden.

Falls die erfindungsgemäßen Massen Vernetzer (C) enthalten, handelt es sich um Mengen von vorzugsweise 0,01 bis 20 Gewichtsteilen, besonders bevorzugt 0,5 bis 10 Gewichtsteilen, insbesondere 1,0 bis 5,0 Gewichtsteilen, jeweils bezogen auf 100 Gewichtsteile Organosiliciumverbindung (A).

Bei den in den erfindungsgemäßen Massen eingesetzten, basischen Stickstoff aufweisenden Verbindungen (D) handelt es sich vorzugsweise um solche, ausgewählt aus der Gruppe bestehend aus Verbindungen der Formel

NR⁶₃ (IV),

wobei R⁶ gleich oder verschieden sein kann und Wasserstoffatom oder Kohlenwasserstoffreste, die gegebenenfalls mit Hydroxygruppen, Halogenatomen, Aminogruppen, Ethergruppen, Estergruppen, Epoxygruppen, Mercaptogruppen, Cyanogruppen oder (Poly)-glykolresten substituiert sind, wobei letztere aus Oxyethylen- und/oder Oxypropyleneinheiten aufgebaut sind, bedeutet,
mit der Maßgabe, dass in Formel (IV) höchstens zwei R⁶ die Bedeutung von Wasserstoffatom haben, aliphatischen cyclischen Aminen, wie beispielsweise Piperidin und Morpholin,
sowie Organosiliciumverbindungen mit mindestens einem basischen Stickstoff aufweisenden organischen Rest aus Einheiten der Formel

R⁷ₖAₗSi(OR⁸)ₘO_{(4-k-l-m)/2} (V),

worin
R⁷ gleich oder verschieden sein kann und einen einwertigen, SiC-gebundenen, von basischem Stickstoff freien organischen Rest bedeutet,
R⁸ gleich oder verschieden sein kann und eine für Rest R¹ angegebene Beduetung hat,
A gleich oder verschieden sein kann und einen einwertigen, SiC-gebundenen Rest mit basischem Stickstoff bedeutet,
k 0, 1, 2, oder 3,
l 0, 1, 2, 3 oder 4 und
m 0, 1, 2 oder 3 ist,
mit der Maßgabe, dass die Summe aus k+1+m kleiner oder gleich 4 ist und pro Molekül mindestens ein Rest A anwesend ist.

Beispiele für Rest R⁶ und R⁷ sind jeweils unabhängig voneinander die für R angegebenen Beispiele für gegebenenfalls substituierte Kohlenwasserstoffreste.

Bei den gegebenenfalls substituierten Kohlenwasserstoffresten R⁶ handelt es sich vorzugsweise um solche mit 1 bis 18 Kohlenstoffatomen.

Bei Rest R⁷ handelt es sich vorzugsweise um Kohlenwasserstoffreste mit 1 bis 18 Kohlenstoffatomen, wobei der Methyl-, Ethyl- und n-Propylrest besonders bevorzugt sind, insbesondere der Methylrest.

Beispiele für Rest R⁸ sind die für Rest R¹ angegebenen Beispiele.

Vorzugsweise handelt es sich bei Rest R⁸ um Wasserstoffatom, Methyl- und Ethylrest.

Beispiele für Reste A sind Reste der Formeln H₂NCH₂-, H₂N(CH₂)₂-, H₂N(CH₂)₃-, H₂N(CH₂)₂NH(CH₂)₂-, H₂N(CH₂)₂NH(CH₂)₃-, H₂N(CH₂)₂NH(CH₂)₂NH(CH₂)₃-, H₃CNH(CH₂)₃-, C₂H₅NH(CH₂)₃-, H₃CNH(CH₂)₂-, C₂H₅NH(CH₂)₂-, H₂N(CH₂)₄-, H₂N(CH₂)₅-, H(NHCH₂CH₂)₃-, C₄H₉NH(CH₂)₂NH(CH₂)₂-, cyclo-C₆H₁₁NH(CH₂)₃-, cyclo-C₆H₁₁NH(CH₂)₂-, (CH₃)₂N(CH₂)₃-, (CH₃)₂N(CH₂)₂-, (C₂H₅)₂N(CH₂)₃- und (C₂H₅)₂N(CH₂)₂-.

Bevorzugt handelt es sich bei A um H₂N(CH₂)₃-, H₂N(CH₂)₂NH(CH₂)₃-, H₃CNH(CH₂)₃-, C₂H₅NH(CH₂)₃- und cyclo-C₆H₁₁NH(CH₂)₃-Rest, wobei H₂N(CH₂)₂NH(CH₂)₃- und cyclo-C₆H₁₁NH(CH₂)₃-Rest besonders bevorzugt sind.

Handelt es sich bei den Organosiliciumverbindungen aus Einheiten der Formel (V) um Silane, so ist k bevorzugt 0, 1 oder 2, besonders bevorzugt 0 oder 1, 1 bevorzugt 1 oder 2, besonders bevorzugt 1, und m bevorzugt 1, 2 oder 3, besonders bevorzugt 2 oder 3, mit der Maßgabe, dass die Summe aus k+l+m gleich 4 ist.

Beispiele für die erfindungsgemäß einsetzbaren Silane der Formel (V) sind H₂N(CH₂)₃-Si(OCH₃)₃, H₂N(CH₂)₃-Si(OC₂H₅)₃, H₂N(CH₂)₃-Si(OCH₃)₂CH₃, H₂N(CH₂)₃-Si(OC₂H₅)₂CH₃, H₂N(CH₂)₂NH(CH₂)₃-Si(OCH₃)₃, H₂N(CH₂)₂NH(CH₂)₃-Si(OC₂H₅)₃, H₂N(CH₂)₂NH(CH₂)₃-Si(OCH₃)₂CH₃, H₂N(CH₂)₂NH(CH₂)₃-Si(OC₂H₅)₂CH₃, H₂N(CH₂)₂NH(CH₂)₃-Si(OH)₃, H₂N(CH₂)₂NH(CH₂)₃-Si(OH)₂CH₃, H₂N(CH₂)₂NH(CH₂)₂NH(CH₂)₃-Si(OCH₃)₃, H₂N(CH₂)₂NH(CH₂)₂NH(CH₂)₃-Si(OC₂H₅)₃, cyclo-C₆H₁₁NH(CH₂)₃-Si(OCH₃)₃, cyclo-C₆H₁₁NH(CH₂)₃-Si(OC₂H₅)₃, cyclo-C₆H₁₁NH(CH₂)₃-Si(OCH₃)₂CH₃, CyClo-C₆H₁₁NH(CH₂)₃-Si(OC₂H₅)₂CH₃, cyclo-C₆H₁₁NH(CH₂)₃-Si(OH)₃, cyclo-C₆H₁₁NH(CH₂)₃-Si(OH)₂CH₃, HN((CH₂)₃-Si(OCH₃)₃)₂ und HN((CH₂)₃-Si(OC₂H₅)₃)₂ sowie deren Teilhydrolysate, wobei H₂N(CH₂)₂NH(CH₂)₃-Si(OCH₃)₃, H₂N(CH₂)₂NH(CH₂)₃-Si(OC₂H₅)₃, H₂N(CH₂)₂NH(CH₂)₃-Si(OCH₃)₂CH₃, H₂N(CH₂)₂NH(CH₂)₃-Si(OC₂H₅)₂CH₃, H₂N(CH₂)₂NH(CH₂)₃-Si(OH)₃, H₂N(CH₂)₂NH(CH₂)₃-Si(OH)₂CH₃, cyclo-C₆H₁₁NH(CH₂)₃-Si(OCH₃)₃, cyclo-C₆H₁₁NH(CH₂)₃-Si(OC₂H₅)₃, cyclo-C₆H₁₁NH(CH₂)₃-Si(OCH₃)₂CH₃, cyclo-C₆H₁₁NH(CH₂)₃-Si(OC₂H₅)₂CH₃, cyclo-C₆H₁₁NH(CH₂)₃-Si(OH)₃ sowie cyclo-C₆H₁₁NH(CH₂)₃-Si(OH)₂CH₃ bevorzugt und H₂N(CH₂)₂NH(CH₂)₃-Si(OCH₃)₃, H₂N(CH₂)₂NH(CH₂)₃-Si(OCH₃)₂CH₃, cyclo-C₆H₁₁NH(CH₂)₃-Si(OCH₃)₃, cyclo-C₆H₁₁NH(CH₂)₃-Si(OCH₃)₂CH₃, H₂N(CH₂)₂NH(CH₂)₃-Si(OH)₃ und H₂N(CH₂)₂NH(CH₂)₃-Si(OH)₂CH₃ sowie jeweils deren Teilhydrolysate besonders bevorzugt sind.

Falls es sich bei der Organosiliciumverbindung aus Einheiten der Formel (V) um Organopolysiloxane handelt, ist der durchschnittliche Wert von k vorzugsweise zwischen 0,5 und 2,5, besonders bevorzugt zwischen 1,4 und 2,0, der durchschnittliche Wert von 1 vorzugsweise zwischen 0,01 und 1,0, besonders bevorzugt zwischen 0,01 und 0,6, und der durchschnittliche Wert von m vorzugsweise zwischen 0 und 2,0, besonders bevorzugt zwischen 0 und 0,2, mit der Maßgabe, dass die Summe aus k, 1 und m kleiner oder gleich 3 ist.

Die erfindungsgemäß einsetzbaren Organopolysiloxane aus Einheiten der Formel (V) haben eine Viskosität bei 25°C von vorzugsweise 5 bis 10⁵ mPas, besonders bevorzugt von 10 bis 10⁴ mPas.

Beispiele für die erfindungsgemäß einsetzbaren Organopolysiloxane aus Einheiten der Formel (V) sind H₂N(CH₂)₃-Si(OCH₃)₂-O-Si(CH₃)(OCH₃)₂, H₂N(CH₂)₃-Si(OC₂H₅)₂-O-Si(CH₃)(OCH₃)₂, H₂N(CH₂)₃-Si(OC₂H₅)₂-O-Si(CH₃)(OC₂H₅)₂, H₂N(CH₂)₃-Si(OCH₃)(CH₃)-O-Si(CH₃)(OCH₃)₂, H₂N(CH₂)₃-Si(OCH₃)(CH₃)-O-Si(OCH₃)₃, H₂N(CH₂)₃-Si(OC₂H₅)(CH₃)-O-Si(OCH₃)₃, H₂N(CH₂)₂NH(CH₂)₃-Si(OCH₃)₂-O-Si(CH₃)(OCH₃)₂, H₂N(CH₂)₂NH(CH₂)₃-Si(OC₂H₅)₂-O-Si(CH₃)(OCH₃)₂, H₂N(CH₂)₂NH(CH₂)₃-Si(OC₂H₅)₂-O-Si(CH₃)(OC₂H₅)₂, H₂N(CH₂)₂NH(CH₂)₃-Si(OCH₃)(CH₃)-O-Si(CH₃)(OCH₃)₂, H₂N(CH₂)₂NH(CH₂)₃-Si(OCH₃)(CH₃)-O-Si(OCH₃)₃, H₂N(CH₂)₂NH(CH₂)₃-Si(OC₂H₅)(CH₃)-O-Si(OCH₃)₃, cyclo-C₆H₁₁NH(CH₂)₃-Si(OCH₃)₂-O-Si(CH₃)(OCH₃)₂, cyclo-C₆H₁₁NH(CH₂)₃-Si(OC₂H₅)₂-O-Si(CH₃)(OCH₃)₂, cyclo-C₆H₁₁NH(CH₂)₃-Si(OC₂H₅)₂-O-Si(CH₃)(OC₂H₅)₂, cyclo-C₆H₁₁NH(CH₂)₃-Si(OCH₃)(CH₃)-O-Si(CH₃)(OCH₃)₂, cyclo-C₆H₁₁NH(CH₂)₃-Si(OCH₃)(CH₃)-O-Si(OCH₃)₃ und cyclo-C₆H₁₁NH(CH₂)₃-Si(OC₂H₅)(CH₃-O-Si(OCH₃)₃, H₂N(CH₂)₃-Si(OCH₃)₂-(O-Si(CH₃)₂)₁₋₁₀₀-0-Si(OCH₃)₂-(CH₂)₃NH₂, H₂N(CH₂)₃-Si(OCH₂CH₃)₂-(O-Si(OCH₂CH₃)₂)₁₋₁₀₀-(O-Si(OCH₂CH₃)(CH₂)₃NH₂)₁₋₁₀₀-O-Si(OCH₂CH₃)₂-(CH₂)₃NH₂, Si(OCH₂CH₃)₃-(O-Si(OCH₂CH₃)₂)₁₋₁₀₀-(O-Si(OCH₂CH₃)(CH₂)₃NH₂)₁₋₁₀₀-O-Si(OCH₂CH₃)₃, H₂N(CH₂)₂NH(CH₂)₃-Si(OCH₃)₂-(O-Si(CH₃)₂)₁-₁₀₀-0-Si(OCH₃)₂-(CH₂)₃NH(CH₂)₂NH₂, H₂N(CH₂)₂NH(CH₂)₃-Si(OCH₃)₂-(O-Si(CH₃)₂)₁₋₁₀₀-(O-Si(OCH₃)(CH₂)₃NH(CH₂)₂NH₂)₁₋₁₀₀-O-Si(OCH₃)₂-(CH₂)₃NH(CH₂)₂NH₂, HO-Si(CH₃)₂-(O-Si(CH₃)₂)₁₋₁₀₀-(O-Si(OCH₃)(CH₂)₃NH(CH₂)₂NH₂)₁₋₁₀₀-O-Si(CH₃)₂-OH
und
cyclo-C₆H₁₁NH(CH₂)₃-Si(OCH₃)₂-(O-Si(CH₃)₂)₁₋₁₀₀-0-Si(OCH₃)₂-(CH₂)₃NH Cyclo-C₆H₁₁ sowie deren Teilhydrolysate und durch Equilibrierungsreaktionen mit Si-O-Si-haltigen Verbindungen herstellbaren Verbindungen, wobei H₂N(CH₂)₃-Si(OC₂H₅)₂-O-Si(CH₃)(OC₂H₅)₂, H₂N(CH₂)₃-Si(OCH₂CH₃)₂-(O-Si(OCH₂CH₃)₂)₁₋₁₀₀-(O-Si(OCH₂CH₃)(CH₂)₃NH₂)₁₋₁₀₀-O-Si(OCH₂CH₃)₂-(CH₂)₃NH₂ und H₂N(CH₂)₂NH(CH₂)₃-Si(OCH₃)₂-(O-Si(CH₃)₂)₁₋₁₀₀-(O-Si(OCH₃)(CH₂)₃NH(CH₂)₂NH₂)₁₋₁₀₀-O-Si(OCH₃)₂-(CH₂)₃NH(CH₂)₂NH₂ besonders bevorzugt sind.

Organosiliciumverbindungen aus Einheiten der Formel (V) sind handelsübliche Produkte bzw. können nach in der Siliciumchemie gängigen Verfahren hergestellt werden.

Beispiele für Amine der Formel (IV) sind Cyclohexylamin, Triethylamin, Trioctylamin, Butylamin, Dodecylamin, Diethyl-n-propylamin, Cyclohexylmethylamin, 2-Aminoethanol, 2-Amino-n-propanol, 2-Amino-2-methyl-1-propanol, 2-Dimethylamino-2-methyl-1-propanol, N,N-Diethylethanolamin, Ethylendiamin, Cocosfettamin, Cocosfettmethylamin, N,N-Dimethylethanolamin und Anilin.

Bei der Komponente (D) handelt es sich bevorzugt um Organosiliciumverbindungen aus Einheiten der Formel (V).

Zur Herstellung der erfindungsgemäßen Zusammensetzung wird Komponente (D) in einer solchen Menge eingesetzt, dass der Gehalt an basischem Stickstoff 0,01 bis 5 Gewichtsteile, besonders bevorzugt 0,01 bis 1 Gewichtsteile, insbesondere 0,04 bis 0,5 Gewichtsteile, jeweils bezogen auf 100 Gewichtsteile Organosiliciumverbindung (A), beträgt.

Zusätzlich zu den oben beschriebenen Komponenten (A), (B), (C) und (D) können die erfindungsgemäßen Massen nun alle weiteren Stoffe enthalten, die auch bisher in durch Kondensationsreaktion vernetzbaren Massen eingesetzt worden sind, wie z.B. Katalysatoren (E), Weichmacher (F), Füllstoffe (G), Haftvermittler (H) und Additive (I).

Beispiele für Katalysatoren (E) sind alle Katalysatoren, die auch bisher in durch Kondensationsreaktion vernetzbare Massen eingesetzt werden. Beispiele für Katalysatoren (E) sind Titanverbindungen und organische Zinnverbindungen, wie Di-n-butylzinndilaurat und Di-n-butylzinndiacetat, Di-n-butylzinnoxid, Dioctylzinndiacetat, Dioctylzinndilaurat, Dioctylzinnoxid sowie Umsetzungsprodukte dieser Verbindungen mit Alkoxysilanen, wie Tetraethoxysilan, wobei Di-n-butylzinndiacetat und Dibutylzinnoxid in Tetraethylsilikat-Hydrolysat bevorzugt sind und Di-n-butylzinnoxid in Tetraethylsilikat-Hydrolysat besonders bevorzugt ist.

Falls die erfindungsgemäßen Massen Katalysator (E) enthalten, handelt es sich um Mengen von vorzugsweise 0,01 bis 3 Gewichtsteilen, bevorzugt 0,05 bis 2 Gewichtteilen, jeweils bezogen auf 100 Gewichtsteile Bestandteil (A).

Beispiele für Weichmacher (F) sind bei Raumtemperatur flüssige, durch Trimethylsiloxygruppen endblockierte Dimethylpolysiloxane, insbesondere mit Viskositäten bei 25°C im Bereich zwischen 50 und 1000 mPas, sowie hochsiedende Kohlenwasserstoffe, wie zum Beispiel Paraffinöle oder Mineralöle bestehend aus naphthenischen und paraffinischen Einheiten.

Die erfindungsgemäßen Massen enthalten Weichmacher (F) in Mengen von vorzugsweise 0 bis 300 Gewichtsteilen, besonders bevorzugt 1O bis 200 Gewichtsteilen, insbesondere 20 bis 100 Gewichtsteilen, jeweils bezogen auf 100 Gewichtsteile Organopolysiloxan (A).

Beispiele für Füllstoffe (G) sind nicht verstärkende Füllstoffe, also Füllstoffe mit einer SET-Oberfläche von bis zu 50 m2/g, wie Quarz, Diatomeenerde, Calciumsilikat, Zirkoniumsilikat, Zeolithe, Metalloxidpulver, wie Aluminium-, Titan-, Eisen- oder Zinkoxide bzw. deren Mischoxide, Bariumsulfat, Calciumcarbonat, Gips, Siliciumnitrid, Siliciumcarbid, Bornitrid, Glas- und Kunststoffpulver, wie Polyacrylnitrilpulver; verstärkende Füllstoffe, also Füllstoffe mit einer BET-Oberfläche von mehr als 50 m2/g, wie pyrogen hergestellte Kieselsäure, gefällte Kieselsäure, gefällte Kreide, Ruß, wie Furnace- und Acetylenruß und Silicium-Aluminium-Mischoxide großer SET-Oberfläche; faserförmige Füllstoffe, wie Asbest sowie Kunststofffasern. Die genannten Füllstoffe können hydrophobiert sein, beispielsweise durch die Behandlung mit Organosilanen bzw. -siloxanen oder mit Stearinsäure oder durch Veretherung von Hydroxylgruppen zu Alkoxygruppen. Falls Füllstoffe (G) eingesetzt werden, handelt es sich bevorzugt um hydrophile pyrogene Kieselsäure und gefälltes oder gemahlenes Calciumcarbonat.

Die erfindungsgemäßen Massen enthalten Füllstoffe (G) in Mengen von vorzugsweise O bis 300 Gewichtsteilen, besonders bevorzugt 1 bis 200 Gewichtsteilen, insbesondere 5 bis 200 Gewichtsteilen, jeweils bezogen auf 100 Gewichtsteile Organopolysiloxan (A).

Beispiele für die in den erfindungsgemäßen Massen eingesetzten Haftvermittler (H) sind Silane und Organopolysiloxane mit funktionellen Gruppen, wie beispielsweise solche mit Glycidoxypropyl- oder Methacryloxypropylresten sowie Tetraalkoxysilane und T- oder Q-Gruppen enthaltende Siloxane, die ggf. Alkoxgruppen aufweisen können. Falls jedoch bereits eine andere Komponente, wie etwa Siloxan (A) oder Vernetzer (C) oder Amin (D), die genannten funktionellen Gruppen aufweist, kann auf einen Zusatz von Haftvermittler verzichtet werden.

Die erfindungsgemäßen Massen enthalten Haftvermittler (H) in Mengen von vorzugsweise 0 bis 50 Gewichtsteilen, besonders bevorzugt 1 bis 20 Gewichtsteilen, insbesondere 1 bis 1O Gewichtsteilen, jeweils bezogen auf 100 Gewichtsteile Organosiliciumverbindung (A).

Beispiele für Additive (l) sind Pigmente, Farbstoffe, Riechstoffe, Oxidationsinhibitoren, Mittel zur Beeinflussung der elektrischen Eigenschaften, wie leitfähiger Ruß, flammabweisend machende Mittel, Lichtschutzmittel, Mittel zur Verlängerung der Hautbildungszeit, wie Silane mit einem SiC-gebundenen Mercaptoalkylrest, zellenerzeugende Mittel, z.B. Azodicarbonamid, Hitzestabilisatoren, Scavenger, wie Si-N enthaltende Silazane oder Silylamide, Cokatalysatoren, wie Lewis- und Brönstedsäuren, z.B. Sulfonsäuren, Phosphorsäuren, Phoshorsäureester, Phosphonsäuren und Phosphonsäureester, und Thixotropiermittel, wie beispielsweise Phosphorsäureester oder Polyglykole, und organischen Lösungsmittel, wie Alkylaromaten.

Die erfindungsgemäßen Massen enthalten Additive (l) in Mengen von vorzugsweise O bis 100 Gewichtsteilen, besonders bevorzugt 0 bis 30 Gewichtsteilen, insbesondere 0 bis 10 Gewichtsteilen, jeweils bezogen auf 100 Gewichtsteile Organosiliciumverbindung (A).

Insbesondere bevorzugt handelt es sich bei den erfindungsgemäßen Massen um solche herstellbar unter Verwendung von
(A) Organosiliciumverbindungen enthaltend Einheiten der Formel (l),
(B) verkapselten Bioziden, wobei es sich bei dem Biozid um 2-n-Octyl-4-isothiazolin-3-on (OIT) und 4,5-Dichloro-2-n-octyl-4-isothiazolin-3-on (DCOIT) handelt,
   gegebenenfalls
(C) Vernetzer der Formel (III),
(D) basischen Stickstoff aufweisender Verbindung in der in Anspruch 1 offenbarten Menge, gegebenenfalls
(E) Katalysator,
   gegebenenfalls
(F) Weichmacher,
   gegebenenfalls
(G) Füllstoffen,
   gegebenenfalls
(H) Haftvermittler und
   gegebenenfalls
(I) Additiven,
   wobei keine weiteren Komponent eneingesetzt werden.

Bei den erfindungsgemäßen Massen handelt es sich bevorzugt um zähflüssig bis pastöse Massen.

Zur Bereitung der erfindungsgemäßen Massen können alle Bestandteile in beliebiger Reihenfolge miteinander vermischt werden. Dieses Vermischen kann bei Raumtemperatur und dem Druck der umgebenden Atmosphäre, also etwa 900 bis 1100 hPa, erfolgen. Falls erwünscht, kann dieses Vermischen aber auch bei höheren Temperaturen erfolgen, z.B. bei Temperaturen im Bereich von 35°C bis 135°C. Weiterhin ist es möglich, zeitweilig oder ständig unter vermindertem Druck zu mischen, wie z.B. bei 30 bis 500 hPa Absolutdruck, um flüchtige Verbindungen oder Luft zu entfernen.

Bei den einzelnen Bestandteilen der erfindungsgemäßen Massen kann es sich jeweils um eine Art eines solchen Bestandteils wie auch um ein Gemisch aus mindestens zwei verschiedenen Arten derartiger Bestandteile handeln.

Für die Vernetzung der erfindungsgemäßen Massen reicht der übliche Wassergehalt der Luft aus. Die Vernetzung der erfindungsgemäßen Massen erfolgt vorzugsweise bei Raumtemperatur. Sie kann, falls erwünscht, auch bei höheren oder niedrigeren Temperaturen als Raumtemperatur, z.B. bei -5° bis 15°C oder bei 30° bis 50°C und/oder mittels den normalen Wassergehalt der Luft übersteigenden Konzentrationen von Wasser durchgeführt werden.

Vorzugsweise wird die Vernetzung bei einem Druck von 100 bis 1100 hPa, insbesondere beim Druck der umgebenden Atmosphäre, also etwa 900 bis 1100 hPa, durchgeführt.

Ein weiterer Gegenstand der vorliegenden Erfindung sind Formkörper, hergestellt durch Vernetzung der erfindungsgemäßen Massen.

Die erfindungsgemäßen Massen können für alle Verwendungszwecke eingesetzt werden, für die unter Ausschluss von Wasser lagerfähige, bei Zutritt von Wasser bei Raumtemperatur zu Elastomeren vernetzende Massen eingesetzt werden können.

Die erfindungsgemäßen Massen eignen sich somit ausgezeichnet beispielsweise als Abdichtmassen für Fugen, einschließlich senkrecht verlaufender Fugen, und ähnlichen Leerräumen von z.B. 10 bis 40 mm lichter Weite, z.B. von Gebäuden, Land-, Wasser- und Luftfahrzeugen, oder als Klebstoffe oder Verkittungsmassen, z.B. im Fensterbau oder bei der Herstellung von Vitrinen, sowie z.B. zur Herstellung von Schutzüberzügen, einschließlich solcher für der ständigen Einwirkung von Süß- oder Meerwasser ausgesetzte Oberflächen, oder das Gleiten verhindernden Überzügen, oder von gummielastischen Formkörpern sowie für die Isolierung von elektrischen oder elektronischen Vorrichtungen.

Die erfindungsgemäßen Massen haben den Vorteil, dass sie leicht herzustellen sind, kennzeichnungsfrei sind und gleichzeitig über einen äußerst langen Zeitraum biozide Wirkung zeigen.

Des Weiteren haben die erfindungsgemäßen Massen den Vorteil, dass durch die biozide Ausrüstung die Neigung zur Verfärbung sowohl der noch nicht ausgehärteten Masse als auch der ausgehärteten Formkörper äußerst gering ist.

Die erfindungsgemäßen vernetzbaren Massen haben den Vorteil, dass sie sich durch eine sehr hohe Lagerstabilität und eine hohe Vernetzungsgeschwindigkeit auszeichnen.

In den nachstehend beschriebenen Beispielen beziehen sich alle Viskositätsangaben auf eine Temperatur von 25°C. Sofern nicht anders angegeben, werden die nachstehenden Beispiele bei einem Druck der umgebenden Atmosphäre, also etwa bei 1000 hPa, und bei Raumtemperatur, also bei etwa 23°C, bzw. bei einer Temperatur, die sich beim Zusammengeben der Reaktanden bei Raumtemperatur ohne zusätzliche Heizung oder Kühlung einstellt, sowie bei einer relativen Luftfeuchtigkeit von etwa 50 % durchgeführt. Des Weiteren beziehen sich alle Angaben von Teilen und Prozentsätzen, soweit nichts anderes angegeben ist, auf das Gewicht.

### Herstellung der Fungizidzubereitung 1

Wässrige Dispersion von mikroverkapseltem 2-n-Octyl-4-isothiazolin-3-on (OIT) (käuflich erhältlich unter der Bezeichnung "Acticide® OTW" bei der Thor GmbH) wurde sprühgetrocknet. 6 g des so erhaltenen, verkapselten und getrockneten OIT mit einem Wirkstoffgehalt von 65 % werden in 14 g eines trimethylsilylendblockierten Polydimethylsiloxans mit einer Viskosität von 1000 mPa·s dispergiert. Dazu wurden die Bestandteile mit einem Spatel vermischt und anschließend in einem Hauschildmischer 30 Sekunden bei 3000 U/min homogenisiert.

### Beispiel 1

330 g eines Polydimethylsiloxangemischs, bei denen die Siloxane mit Dimethoxymethylsilyl- und/oder Dimethoxyvinylsilylgruppen terminiert sind und das Verhältnis von Dimethoxymethylsilyl-Endgruppen zu Dimethoxyvinylsilyl-Endgruppen in etwa 1:1 ist, mit einer Viskosität von 80 000 mPa·s, 265 g eines trimethylsilylendblockierten Polydimethylsiloxans mit einer Viskosität von 1000 mPa·s, 14 g Methyltrimethoxysilan, 12,5 g eines Haftvermittlers, der hergestellt wird durch die Umsetzung von 1 Teil Aminopropyltriethoxsilan mit 1 Teil Methyltriethoxsilan-Hydrolysat mit einem Ethoxygehalt von 37 %, und 4,5 g Aminopropyltrimethoxysilan werden in einem Planetenmischer miteinander gemischt und 15 Minuten gerührt. Anschließend wird der Ansatz durch homogenes Einmischen von 63 g pyrogener Kieselsäure mit einer spezifischen Oberfläche von 150 m²/g (käuflich erhältlich unter der Marke HDK® V15 bei der Wacker Chemie AG), 1,1 g Octylphosphonsäure, 1,4 g eines Polyethylenglykolpolypropylenglykol-copolymers mit einer Viskosität von 700 mPa·s, 2,5 g eines Zinnkatalysators, der hergestellt wird durch Umsetzung von Din-butylzinndiacetat und Tetraethoxysilan, und 3,6 g der oben beschriebenen Fungizidzubereitung 1 (entspricht 1000 ppm Wirkstoff bezogen auf das Gesamtgewicht der Masse) vervollständigt. Zum Schluss wird durch 5 minütiges Rühren bei ca. 100 hPa die eingerührte Luft entfernt.

Die so erhaltene Masse wurde in eine Aluminium-Tube gefüllt, luftdicht abgeschlossen und 4 Monate bei Raumtemperatur gelagert. Anschließend wurde die Probe in einer Dicke von 2 mm auf einer PE-Folie aufgetragen und bei 23°C/50 % rel. Luftfeuchtigkeit gelagert. Die Probe zeigte ein normales Aushärtungsverhalten und keinerlei Verfärbung.

Der ausgehärtete Gummi zeigte eine gute fungizide Wirkung gegenüber allen in der ISO 846 vorgeschriebenen Pilzarten, sowohl nach 14 Tagen Aushärtung, als auch nach 14 Tagen Aushärtung, anschließender 4 Wochen Lagerung im Wasserbad mit täglichem Wasserwechsel und abschließender 28 Tagen Lagerung bei Raumtemperatur.

### Vergleichsbeispiel 1

Eine Masse wurde, wie im Beispiel 1 beschrieben, hergestellt, mit der Abänderung, dass anstelle der 1000 ppm verkapselten OIT-Zubereitung 1000 ppm OIT als 10%ige Lösung in Dodecylbenzol zugesetzt wurde.

Nach 4 Monaten Lagerung bei Raumtemperatur war die Masse stark vergilbt. Der ausgehärtete Gummi zeigte keine fungizide Wirkung gegenüber allen in der ISO 846 vorgeschriebenen Pilzarten.

### Beispiel 2

300 g eines Polydimethylsiloxans mit Hydroxydimethlysilyl-Endgruppen und einer Viskosität von 80 000 mPa·s, 200 g eines trimethylsilylendblockierten Polydimethylsiloxans mit einer Viskosität von 1000 mPa·s, 38,5 g Methyltris(methylethylketoximo)silan und 7,0 g Vinyltris(methylethylketoximo)silan werden in einem Planetenmischer miteinander gemischt und 10 Minuten gerührt, dann 8,3 g eines Haftvermittlers, der hergestellt wird durch die Umsetzung von 2 Teilen Aminoethylaminopropyltrimethoxsilan mit 3 Teilen Polydimethylsiloxans mit einer Viskosität von ca. 75 mPa.s hinzugefügt und 3 Minuten weitergerührt. Anschließend wird der Ansatz durch homogenes Einmischen von 48 g pyrogener Kieselsäure mit einer spezifischen Oberfläche von 150 m²/g (käuflich erhältlich unter der Marken HDK® V15 bei der Wacker Chemie AG), 400 g eines gemahlenen und oberflächenbeschichteten Calciumcarbonates mit einem mittleren Teilchendurchmesser von 5,7 µm (käuflich erhältlich bei der Fa. Omya GmbH, D-Köln unter der Bezeichnung "OMYA BLR 3"), 5,0 g der oben beschriebenen Fungizidzubereitung 1 und 0,9 g Di-n-butylzinndiacetat vervollständigt. Zum Schluss wird durch 5 minütiges Rühren bei ca. 100 hPa die eingerührte Luft entfernt.

Die so erhaltene Masse wurde in eine Aluminium-Tube gefüllt, luftdicht abgeschlossen und 4 Monate bei Raumtemperatur gelagert. Anschließend wurde die Probe in einer Dicke von 2 mm auf einer PE-Folie aufgetragen und bei 23°C/50 % rel. Luftfeuchtigkeit gelagert. Die Probe zeigte ein normales Aushärtungsverhalten und keinerlei Verfärbung.

Der ausgehärtete Gummi zeigte eine gute fungizide Wirkung gegenüber allen in der ISO 846 vorgeschriebenen Pilzarten, sowohl nach 14 d Aushärtung, als auch nach 14 Tagen Aushärtung, anschließender 4 Wochen Lagerung im Wasserbad mit täglichem Wasserwechsel und abschließender 28 d Tagen Lagerung bei Raumtemperatur.

### Vergleichsbeispiel 2

Eine Masse wurde, wie im Beispiel 2 beschrieben, hergestellt, mit der Abänderung, dass anstelle der 1000 ppm verkapselten OIT-Zubereitung 1000 ppm OIT als 10%ige Lösung in Dodecylbenzol zugesetzt wurden.

Nach 4 Monaten Lagerung bei Raumtemperatur war die Masse stark vergilbt. Der ausgehärtete Gummi zeigte keine fungizide Wirkung gegenüber allen in der ISO 846 vorgeschriebenen Pilzarten.

## Patentansprüche

1. Vernetzbare Massen auf der Basis von Organosiliciumverbindungen, **dadurch gekennzeichnet, dass** sie verkapselte Biozide enthalten, wobei es sich um solche vernetzbaren Massen handelt herstellbar unter Verwendung von
(A) Organosiliciumverbindung mit mindestens zwei kondensationsfähigen Gruppen,
(B) verkapselte Biozide, wobei es sich bei dem Biozid um 2-n-Octyl-4-isothiazolin-3-on (OIT) und 4,5-Dichloro-2-n-octyl-4-isothiazolin-3-on (DCOIT) handelt
(D) basischen Stickstoff aufweisende Verbindungen, wobei Komponente (D) in einer solchen Menge eingesetzt wird, dass der Gehalt an basischem Stickstoff 0,01 bis 5 Gewichtsteile, bezogen auf 100 Gewichtsteile Organosiliciumverbindung (A), beträgt, und
gegebenenfalls
(C) Vernetzer.

2. Vernetzbare Massen gemäß Anspruch 1, **dadurch gekennzeichnet, dass** es sich bei Organosiliciumverbindungen (A) um solche handelt enthaltend Einheiten der Formel
Rₐ(OR¹)_{b}Y_{c}SiO_{(4-a-b-c)/2} (I),
wobei
R gleich oder verschieden sein kann und gegebenenfalls substituierte Kohlenwasserstoffreste, die durch Sauerstoffatome unterbrochen sein können, bedeutet,
R¹ gleich oder verschieden sein kann und Wasserstoffatom oder einwertige, gegebenenfalls substituierte Kohlenwasserstoffreste, die durch Sauerstoffatome unterbrochen sein können, bedeutet,
Y gleich oder verschieden sein kann und Halogenatom, Pseudohalogenrest, Si-N-gebundene Aminreste, Amidreste, Oximreste und Aminoxyreste bedeutet,
a 0, 1, 2 oder 3 ist,
b 0, 1, 2 oder 3 ist und
c 0, 1, 2 oder 3 ist,
mit der Maßgabe, dass die Summe aus a+b+c kleiner oder gleich 4 ist und pro Molekül mindestens zwei kondensationsfähige Reste (OR¹) anwesend sind.

3. Vernetzbare Massen gemäß einem oder mehreren der Ansprüche 1 bis 2, **dadurch gekennzeichnet, dass** es sich bei Komponente (B) um trockene Pulver handelt.

4. Vernetzbare Massen gemäß einem oder mehreren der Ansprüche 1 bis 3, **dadurch gekennzeichnet, dass** sie Komponente (B) in Mengen von 0,01 bis 3 Gewichtsteilen, bezogen auf 100 Gewichtsteile Organosiliciumverbindung (A), enthalten.

5. Formkörper, hergestellt durch Vernetzung der Massen gemäß einem oder mehreren der Ansprüche 1 bis 4.

## Claims

1. Crosslinkable substances based on organosilicon compounds, **characterized in that** they comprise encapsulated biocides, they being those crosslinkable substances which can be prepared by use of
(A) organosilicon compound with at least two condensable groups,
(B) encapsulated biocides, wherein the biocide is 2-(n-octyl)-4-isothiazolin-3-one (OIT) and 4,5-dichloro-2-(n-octyl)-4-isothiazolin-3-one (DCOIT),
(D) compounds exhibiting basic nitrogen, component (D) being used in such an amount that the content of basic nitrogen is from 0.01 to 5 parts by weight, based on 100 parts by weight of organosilicon compound (A), and if appropriate
(C) crosslinking agent.

2. Crosslinkable substances according to Claim 1, **characterized in that** the organosilicon compounds (A) are those comprising units of the formula
Rₐ(OR¹)_{b}Y_{c}SiO_{(4-a-b-c)/2} (I),
in which
R can be identical or different and represents optionally substituted hydrocarbon radicals which can be interrupted by oxygen atoms,
R¹ can be identical or different and represents a hydrogen atom or monovalent optionally substituted hydrocarbon radicals which can be interrupted by oxygen atoms,
Y can be identical or different and represents a halogen atom, a pseudohalogen radical, Si-N-bonded amine radicals, amide radicals, oxime radicals and aminoxy radicals,
a is 0, 1, 2 or 3,
b is 0, 1, 2 or 3 and
c is 0, 1, 2 or 3,
with the proviso that the sum of a+b+c is less than or equal to 4 and at least two condensable radicals (OR¹) are present per molecule.

3. Crosslinkable substances according to one or more of Claims 1 and 2, **characterized in that** component (B) is a dry powder.

4. Crosslinkable substances according to one or more of Claims 1 to 3, **characterized in that** they comprise component (B) in amounts from 0.01 to 3 parts by weight, based on 100 parts by weight of organosilicon compound (A).

5. Molded articles, prepared by crosslinking the substances according to one or more of Claims 1 to 4.

## Revendications

1. Masses réticulables à base de composes organosiliciés, **caractérisées en ce qu'**elles contiennent des biocides encapsulés masses réticulables pouvant être préparées par l'utilisation
(A) d'un composé organosilicié présentant au moins deux groupes condensables,
(B) de biocides encapsulés, le biocide étant du 2-n-octyl-4-isothiazolin-3-one (OIT) et du 4,5-dichloro-2-n-octyl-4-isothiazolin-3-one (DCOIT),
(D) de composés présentant de l'azote basique, le composant (D) étant utilisé en une quantité telle que la teneur en azote basique est de 0,01 à 5 parties en poids, par rapport à 100 parties en poids de composé organosilicié (A), et
le cas échéant
(C) de réticulants.

2. Masses réticulables selon la revendication 1, **caractérisées en ce qu'**il s'agit, pour les composés organosiliciés (A), de ceux contenant des unités de formule
Rₐ(OR¹)_{b}Y_{c}SiO_{(4-a-b-c)/2} (I)
où
R peut être identique ou différent et signifie des radicaux hydrocarbonés, le cas échéant substitués, qui peuvent être interrompus par des atomes d'oxygène,
R¹ peut être identique ou différent et signifie un atome d'hydrogène ou des radicaux hydrocarbonés monovalents, le cas échéant substitués, qui peuvent être interrompus par des atomes d'oxygène,
Y peut être identique ou différent et signifie un atome d'halogène, un radical pseudohalogène, des radicaux amine liés par Si-N, des radicaux amide, des radicaux oxime et des radicaux aminoxy,
a vaut 0, 1, 2 ou 3,
b vaut 0, 1, 2 ou 3 et
c vaut 0, 1, 2 ou 3,
à condition que la somme de a + b + c soit inférieure ou égale à 4 et qu'il existe au moins deux radicaux condensables (OR¹) par molécule.

3. Masses réticulables selon l'une ou plusieurs des revendications 1 à 2, **caractérisées en ce qu'**il s'agit, pour le composant (B), de poudre sèche.

4. Masses réticulables selon l'une ou plusieurs des revendications 1 à 3, **caractérisées en ce qu'**elles contiennent le composant (B) en des quantités de 0,01 à 3 parties en poids, par rapport à 100 parties en poids de composé organosilicié (A).

5. Corps façonnés, préparés par réticulation des masses selon l'une ou plusieurs des revendications 1 à 4.
